# EUROPEAN PATENT SPECIFICATION

(11) **EP 1 044 247 B1**
(45) Date of publication and mention of the grant of the patent: **09.04.2003**
(21) Application number: 99902136.3
(22) Date of filing: 08.01.1999
(51) Int. Cl.: C09K 7/06

(54) **WATER SOLUBLE INVERT EMULSIONS**
WASSERLÖSLICHE INVERT-EMULSIONEN
EMULSIONS INVERSES HYDROSOLUBLES

(30) Priority: 08.01.1998 US 4267; 26.01.1998 US 13454
(43) Date of publication of application: 18.10.2000
(73) Proprietor: M-I L.L.C., Houston, TX 77002 (US)
(72) Inventor: PATEL, Arvind, D., Houston, TX 77083 (US)
(74) Representative: Boggio, Luigi
(86) International application number: PCT/US99/00483
(87) International publication number: WO 99/035212

(56) References cited:
- WO-A-92/14798
- US-A- 5 348 938

## Description

The present invention relates to drilling and invert emulsion fluids utilized in the drilling, completion and workover of subterranean wells and in particular oil and gas wells.

Many types of fluids have been used in the drilling of oil and gas wells. The selection of an oil based drilling fluid involves a careful balance of the both the good and bad characteristics of such fluids. The type of well to be drilled, the geological characteristics of the oil or gas field in which the well is to be drilled, the location of the well, and the deviation of the well can be factors in the decision as to the type of drilling fluids used.

For a number of years, oil based drilling fluids and invert emulsion muds have been utilized in the drilling of subterranean wells. These fluids typically are comprised of a hydrocarbon oil or mixtures of oils as the major component of the liquid phase to which various materials are added to impart the desired drilling fluid properties. These fluids are well adapted for use in underground formations containing water sensitive clays or shales which swell and disintegrate when contacted by water based drilling fluids. True oil-based fluids are substantially free of water, lose mostly oil as the filtrate and cause no swelling or disintegration of water sensitive clays and shales. Water-in-oil emulsions are also used as drilling fluids. These fluids contain oil as the continuous phase and water as the internal or discontinuous phase. A water-in-oil emulsion is also known as an invert emulsion. The true oil-based and the invert emulsion muds generally contain one or more weighting agents, surfactants, viscosifiers, fluid loss control agents or bridging agents.

The primary benefits of selecting an oil based drilling fluid include: superior hole stability, especially in shale formations; formation of a thinner filter cake than the filter cake achieved with a water based mud; excellent lubrication of the drilling string and downhole tools; penetration of salt beds without sloughing or enlargement of the hole as well as other benefits that should be known to one of skill in the art.

An especially beneficial property of oil based drilling fluids are their excellent lubrication qualities. These lubrication properties permit the drilling of wells having a significant vertical deviation, as is typical of off shore or deep water drilling operations or when a horizontal well is desired. In such highly deviated holes, the torque and drag on the drill string are significant because the drill pipe lies against the low side of the hole. Under these conditions, the risk of pipe sticking is high when water based muds are used. In contrast oil based muds provide a thin, slick filter cake which helps to prevent pipe sticking. Thus the use of the oil based mud is preferred.

Despite the above noted benefits, the use of oil based drilling fluids and muds has it drawbacks. The initial start up and operational costs are often greater than drilling with a water based mud. However, often the higher costs can be justified if the oil based drilling fluid prevents the caving in or enlargement of the well bore which can greatly increase drilling time and well completion costs.

Environmental regulations have also severely limited the use of oil based and invert emulsion oil muds as drilling fluids. Of particular concern is the disposal of oil coated drilling cuttings especially in off shore or deep water drilling operations. Environmentally sound disposal of oil-coated cuttings is required, which in these latter cases, the cuttings must be either processed onboard the drilling rig, or the cuttings must be shipped back to shore for disposal in an environmentally safe manner.

In view of the above, there exists a need for an oil based drilling fluid or invert mud emulsion that is soluble in sea water, especially cold sea water, yet stable under down-hole drilling conditions. Such a fluid can reduce the environmental impact of drilled cuttings discharged to the sea floor.

The present invention is generally directed to a drilling fluid that is useful in the drilling, completing and working over of subterranean wells, preferably oil and gas wells. In one embodiment the drilling fluid includes a continuous phase that has at least one preferentially-oil-soluble glycol ether having a viscosity of less than 10 centipoise at 25°C (77°F) and an emulsifier. In another embodiment, the continuous phase of an invert emulsion includes a glycol ether that is soluble in oil and other oleaginous fluids at 20°C (68°F) but is minimally soluble in aqueous solutions such as deionized water, fresh water, sea water, and calcium chloride brine at that temperature. Propylene glycol n-butyl ethers have been found to be useful in the practice of the present invention. In particular, propylene glycol n-butyl ether (PNB), dipropylene glycol n-butyl ether (DPNB), tripropylene glycol n-butyl ether (TPNB), tetrapropylene glycol n-butyl ether (TtPNB), pentapropylene glycol n-butyl ether (PPNB), hexapropylene glycol n-butyl ether (HxPNB), heptapropylene glycol n-butyl ether (HpPNB) and mixtures thereof have been found to be suitable for the continuous phase of the drilling fluids and invert emulsions of the present invention. Drilling fluid additives including lubricants. weighting agents, surfactants and emulsifying agents, bridging agents, organophilic clays and other suspending agents and the like may be used in the drilling fluids of the present invention.

The use of drilling fluids and invert emulsions in the drilling of oil and gas wells should be known to one of skill in the art as is noted in the book COMPOSITION AND PROPERTIES OF DRILLING AND COMPLETION FLUIDS, 5th Edition, H.C.H. Darley and George R. Gray, Gulf Publishing Company, 1988, the contents of which are hereby incorporated herein by reference.

The following terms are used herein and mean the following:
"oleaginous fluid" is a fluid that is miscible at 20°C (68°F) with mineral oil or similar hydrocarbon that may be conventionally used to form the continuous phase of an invert emulsion;
"preferentially-oil-soluble glycol ether" is a glycol ether which at 20°C (68°F) is: 1) miscible at all proportions with oil, specifically with ISOPAR-M, but 2) has limited miscibility with water, specifically less than 10% by volume of the glycol ether is miscible in fresh water, that is to say 10% volume of the glycol ether mixed with fresh water results in two phases. ISOPAR-M is a isoparaffinic hydrocarbon mineral oil supplied by Exxon Chemical;
"glycol ether" is a compound having the general formula: 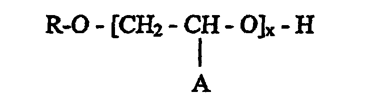 wherein R is an alkyl group, x is an integer greater than or equal to 1, and A is CH₃ or H or a combination of the two;
"nonoleaginous fluid" is a fluid which is not miscible with oil at 20°C (68°F);
"invert emulsion" is an emulsion of a oleaginous fluid and a nonoleaginous fluid in which the oleaginous fluid forms the continuous phase and the nonoleaginous fluid forms the discontinuous phase.

One illustrative embodiment of the present invention is a drilling fluid including one or more preferentially-oil-soluble glycol ethers in the continuous phase of the drilling fluid and an emulsifying agent. The glycol ether preferably has a viscosity of less than 10 centipoise at 25°C (77°F). In one embodiment, the glycol ether preferably comprises at least 5% by volume of the continuous phase of the drilling fluid and preferably comprises at least 50% by volume of the continuous phase of the drilling fluid. The drilling fluid may optionally include a lubricant or an oil. The lubricant or oil may be selected from the group including mineral oil, vegetable oil, synthetic oil, silicone oil, combinations of these and the like. Examples of vegetable oils include corn oil, soy bean oil, sunflower oil, safflower oil. rapeseed oil, peanut oil. cottonseed oil, rice bran oil, castor bean oil, linseed oil and the like. A synthetic oil may be selected from the group including esters, ethers, dialkyl carbonates, acetals or synthetic hydrocarbons which are suitable for such purposes. Examples of such compounds include, polyalphaolefins, polyethylene glycol, monocarboxylic acid esters of C₂ to C₁₂ alkanol such as those disclosed in U.S. Patent No 5,232,910, the contents of which are incorporated herein by reference, dialkyl carbonates in which the alkyl groups have more than 2 carbon atoms, acetals in which the alkoxy groups have more than 2 carbon atoms and the like. In one embodiment the glycol ether is selected form the group including propylene glycol n-butyl ether (PNB); dipropylene glycol n-butyl ether (DPNB); tripropylene glycol n-butyl ether (TPNB); tetrapropylene glycol n-butyl ether (TtPNB); pentapropylene glycol n-butyl ether (PnPNB); hexapropylene glycol n-butyl ether (HxPNB); heptapropylene glycol n-butyl ether (HpPNB) and the t-butyl ethers of these. In another embodiment propylene glycol n-butyl ether or dipropylene glycol n-butyl ether are preferred. The present invention may be carried out using a mixture of glycol ethers. For example a mixture may include tripropylene glycol n-butyl ether, tetrapropylene glycol n-butyl ether, pentapropylene glycol n-butyl ether and hexapropylene glycol n-butyl ether herein referred to as polypropylene glycol n-butyl ether (PPNB). An example of such a mixture is commercially available from Shrieve Chemical Co. under the name Drill-Col 545-X which is also referred to herein as PPNB.

It should be noted that unlike previously disclosed drilling fluids in which glycol ethers form the continuous phase, the glycol ethers of the present invention are sufficiently immiscible to form an invert emulsion regardless of the salinity or lack of salinity of the aqueous phase. The glycol ethers previously disclosed, such as those in U.S. Patent 5,057,234 and U.K. Patent Application GB2,252,993, are soluble in deionized water, fresh water and sea water, but not in brine. The previously disclosed glycol ethers depend on salinity to maintain water immiscibility whereas those of the present invention rely on temperature. That is to say, the glycol ethers of the present invention are not miscible with aqueous solutions at formation temperatures which are typically greater than 20°C (68°F) and yet remain miscible in fresh water or sea water at temperatures less than 20°C (68°F).

The glycol ethers of the present invention are selected so as to be preferentially-oil-soluble glycol ethers. As previously noted, a preferentially-oil-soluble glycol ether is a glycol ether which at 20°C (68°F) is: 1) miscible at all proportions with oil, specifically with ISOPAR-M, and 2) less than 10% by volume miscible in fresh water, specifically 10% by volume of the glycol ether mixed in fresh water results in two phases.

Another illustrative embodiment of the present invention is an invert emulsion fluid which has utility for drilling, completing or working over subterranean wells and in particular oil and gas wells. This particular embodiment includes an oleaginous fluid that includes a preferentially-oil-soluble glycol ether, such as those previously disclosed. The embodiment further includes a nonoleaginous fluid and an emulsifier the latter of which is functionally effective and is present in a concentration to stabilize the invert emulsion. The nonoleaginous fluid may be selected from aqueous solutions including deionized water, fresh water, sea water, calcium chloride brines, brines containing organic or inorganic dissolved salts, an aqueous liquid containing water-miscible organic compounds and combinations thereof. The amount of the nonoleaginous fluid is typically less than the theoretical limit needed for forming an invert emulsion. Thus in one embodiment the amount of nonoleaginous fluid is less that about 70% by volume and preferably from about 1% to about 70% by volume. In another embodiment, the nonoleaginous fluid is preferably from about 5% to about 60% by volume of the invert emulsion fluid. In one such embodiment the oleaginous fluid comprises greater than 30% by volume of said invert emulsion. The oleaginous fluid should form an invert emulsion with the nonoleaginous fluid at formation temperatures and yet be miscible with cold sea water. It is preferred that the invert emulsion form at temperatures above 20°C (68°F) and more preferably at temperatures above 15°C (59°F). Such embodiments allow the formation of invert emulsions that are useful in drilling operations, but also permit the disposal at sea of the drilling fluid coated drilling cuttings without the environmental concerns typically encountered using conventional oil based drilling fluids.

The present invention is especially useful in cases where the formation temperature is at a temperature where the glycol ether forms the continuous phase of a invert emulsion and the surrounding ocean water is at a temperature where the glycol ether is miscible with sea water. For example, a formation may have a temperature of 90°C (194°F) while the waters surrounding the drilling platform may be 10°C (50°F) or colder. In such situations, a drilling operation utilizing the present invention can conduct drilling operations downhole where the temperature is greater than the solubility temperature of the glycol ether. However, upon return of the fluids and cuttings to the surface, the drilling cuttings, which are coated with the drilling fluid, may be disposed of at sea without the need for extensive washing. One is able to do this, subject to regulatory approval, because the surrounding sea water is at or below the temperature at which the glycol ether is soluble. In particular, the glycol ether is soluble in sea water at ocean floor temperatures, and thus the impact on benthic life is minimal or short lived.

The fluids of the present invention may further contain additives depending upon the end use of the drilling fluid or invert emulsion so long as the additives do not interfere with the properties of the fluids described herein. For example, wetting agents, organophilic clays, viscosifiers, weighting agents, bridging agents, fluid loss control agents and corrosion inhibitors may be added to the fluid compositions of this invention for additional functional properties. The addition of such agents should be well known to one of skill in the art of formulating drilling fluids and muds.

Wetting agents and emulsifiers that may be suitable for use in this invention include, crude tall oil, oxidized crude tall oil, surfactants, organic phosphate esters, modified imidazolines and amidoamines, alkyl aromatic sulfates and sulfonates, and the like, and combinations or derivatives of these. Versawet® and Versacoat® and Novamul are examples of commercially available emulsifiers manufactured and distributed by M-I, L.L.C. that may be used in this invention. Silwet L-77, L-7001, L7605 and L-7622 are examples of commercially available surfactants and wetting agents manufactured and distributed by Union Carbide Chemical Company Inc.

Organophilic clays, normally amine treated clays, may be useful as viscosifiers in the fluid compositions of the present invention. Other viscosifiers, such as oil soluble polymers, polyamide resins, polycarboxylic acids and soaps can also be used. The amount of viscosifier used in the composition can vary depending upon the end use of the composition. However, concentrations of about 0.1% to 6% by weight are sufficient for most applications. VG-69 and VG-PLUS are organoclay materials distributed by M-I, L.L.C., and Versa-HRP is a polyamide resin material manufactured and distributed by M-I, L.L.C., that may be used in this invention.

Weighting agents or density materials suitable for use in this invention include hematite, magnetite, iron oxides, illmenite. barite, siderite, celestite, dolomite, calcite, magnesium oxides, halites and the like. The quantity of such material added, if any, depends upon the desired density of the final composition. Typically, weight material is added to result in a drilling fluid density of up to about 24 pounds per gallon (2875 kg/m³). The weight material is preferably added up to 21 pounds per gallon (2516 kg/m³)and most preferably up to 19.5 pounds per gallon (2336 kg/m³).

Fluid loss control agents typically act by coating the walls of the borehole as the well is being drilled. Suitable fluid loss control agents which may find utility in this invention include modified lignites, asphaltic compounds, gilsonite, organophilic humates or tannins prepared by reacting humic acid or tannic acid with amides or polyalkylene polyamines, and latex polymers. Typically, fluid loss control agents are added in amounts less than about 10% and preferably less than about 5% by weight of the fluid.

Corrosion inhibitors may also be added to the drilling fluid compositions of this invention to control the corrosion of the drilling equipment used during the drilling operation. Depending upon the type of corrosion encountered, the corrosion inhibitor may be organic or inorganic or some combination thereof. Illustrative examples of such corrosion inhibitors include phosphates, silicates, borates, zinc compounds, organic amines, benzoic acid and benzoic acid derivatives, phophate esters, heterocyclic nitrogen and sulfur compunds, organic acids and the like.

In view of the above, one of skill in the art should appreciate the usefulness of the above described drilling and invert emulsion fluids. Thus one embodiment of the present invention is the use of such invert emulsion fluids in the drilling, completion and workover of oil and gas wells. Because many of the properties of the invert emulsion of the present invention are similar to those of conventional invert emulsions, the application of the fluids should be apparent to one of skill in the art.

The following examples are included to demonstrate preferred embodiments of the invention. It should be appreciated by those of skill in the art that the techniques and compositions disclosed in the examples which follow represent techniques discovered by the inventors to function well in the practice of the invention, and thus can be considered to constitute preferred modes for its practice. However, those of skill in the art should, in light of the present disclosure, appreciate that many changes can be made in the specific embodiments which are disclosed and still obtain a like or similar result without departing from the scope of the invention.

### General Information Relevant to the Examples

These tests were conducted in accordance with the procedures in API Bulletin RP 13B-2, 1990. The following abbreviations are used in describing the following examples:
"PNB" is propylene glycol n-butyl ether.
"DPNB" is dipropylene glycol n-butyl ether.
"TPNB" is tripropylene glycol n-butyl ether.
"PV" is plastic viscosity which is one variable used in the calculation of viscosity characteristics of a drilling fluid, measured in centipoise (cp) units.
"YP" is yield point which is another variable used in the calculation of viscosity characteristics of drilling fluids, measured in pounds per 100 square feet (lb/100 ft²) (1lb/100 ft² x 4.788 x 10⁻¹ = 1 Pascal).
"GELS" is a measure of the suspending characteristics, or the thixotropic properties of a drilling fluid, measured in pounds per 100 square feet (1b/100 ft²) (11b/100 ft² x 4.788 x 10⁻¹ = 1 Pascal).

The following general procedure was used in mixing the mud formulations: The glycol ether, lime and organophilic clay were mixed for 15 min. on a Hamilton Beach mixer in a suitable mixing jar. Emulsifier was added and the combination was further mixed for 10 min. The non-oleaginous fluid was then added and mixed for 15 min. to for the internal phase of the invert emulsion. Weight material (typically barite) was added and the jar contents were mixed for 20 min. The initial and heat aged (HA) fluid properties were measured at the indicated temperatures.

### Example-1

Invert drilling fluids were prepared according to the following formulations. All the materials are in grams.

| Formulation | | | |
|---|---|---|---|
| Material | Mud 1 | Mud 2 | Mud 3 |
| glycol ether | PNB | DPNB | 545-X |
| | 174 | 174 | 174 |
| lime | 4 | 4 | 4 |
| VG-Plus | 4 | 4 | 3 |
| Versacoat | 3 | 3 | 3 |
| Versa-Wet | 3 | 3 | 3 |
| Tagopren - 7006 | 6 | 6 | 6 |
| 25% CaCl₂ Brine | 90 | 90 | 90 |
| Barite | 229 | 229 | 229 |

In the above table, the PNB and DPNB glycol ethers available from Dow Chemical; 545-X is a mixture of polypropylene glycol n-butyl ether compounds available from Shrieve Chemical Co.; VG-PLUS is an organophilic clay available from M-I, L.L.C.; Versacoat is an emulsifier available from M-I. L.L.C.; Versa-Wet is an oxidized crude oil wetting agent available from M-I, L.L.C.; Tagopren-7006 is a silicone emulsifier available from Goldschmidt Chemical Co.; and all other components are technical grade chemicals commonly available.

The following rheologies were measured at room temperature after the above formulated fluids were heat aged at 150°F (65°C) for 16 hours:

| | Mud 1 | Mud 2 | Mud 3 |
|---|---|---|---|
| Plastic Viscosity (PV) | 20 | 22 | 30 |
| Yield Point (YP) | 5 | 7 | 11 |
| Gel Strength | | | |
| 10 sec. | 3 | 3 | 6 |
| 10 min. | 5 | 4 | 7 |
| Electrical Stability (E.S.) | 11 | 23 | 55 |

The above fluids were further heat aged at 250°F (121°C) for 16 hours. Upon cooling, the fluids were mixed for 15 min. and the following rheological properties were measured at room temperature:

| | Mud 1 | Mud 2 | Mud 3 |
|---|---|---|---|
| Plastic Viscosity (PV) | 24 | 23 | 29 |
| Yield Point (YP) | 3 | 9 | 8 |
| Gels | | | |
| 10 sec. | 4 | 4 | 4 |
| 10 min. | 4 | 4 | 4 |
| Electrical Stability (E.S.) | 11 | 24 | 50 |

Upon review of the above results, one of skill in the art should understand that stable drilling fluid formulations can be prepared utilizing glycol ethers of the present invention.

The above fluids after heat aging at 250°F (121°C) for 16 hours were contaminated with simulated drilled solids (25 g. Rev. Dust) and further heat aged at 250°F (121°C) for 116 hours. The following rheological properties were measured at 120°F (49°C).

| | Mud 1 | Mud 2 | Mud 3 |
|---|---|---|---|
| | w/ Rev. Dust | w/ Rev. Dust | w/ Rev. Dust |
| PV | 36 | 34 | 29 |
| YP Gels | 4 | 8 | 7 |
| 10 sec. | 5 | 5 | 4 |
| 10 min. | 6 | 7 | 6 |
| E.S. | 12 | 32 | 69 |

Upon review of the above, one skilled in the art should realize that the above drilling fluids will be useful in the drilling of oil and gas wells.

### Example-2

The following invert-drilling fluids were prepared according to the following formulations. All values for materials are in grams.

| Formulation | Mud 4 | Mud 5 |
|---|---|---|
| glycol ether | PNB | DPNB |
| | 174 | 174 |
| lime | 4 | 4 |
| VG-Plus | 4 | 4 |
| Versa-Coat | 8 | 8 |
| Versa-Wet | 2 | 2 |
| 25% CaCl₂ Brine | 91 | 91 |
| Barite | 229 | 229 |

In the above table, the PNB and DPNB glycol ethers available from Dow Chemical; VG-PLUS is an organophilic clay available from M-I, L.L.C.; Vcrsa-Coat is a surfactant package available from M-I, L.L.C.; and all other components are either the same as noted above in Example 1 or are technical grade chemicals commonly available.

The initial properties were measured as 80°F (27°C) and the muds heat aged (HA) at 250°F (121°C) and the properties were measured again at 120°F (49°C).

| | Mud 4 | | Mud 5 | |
|---|---|---|---|---|
| | Initial | HA | Initial | HA |
| PV | 26 | 23 | 32 | 31 |
| YP Gels | 10 | 3 | 36 | 11 |
| 10 sec. | 5 | 5 | 18 | 9 |
| 10 min. | 5 | 6 | 19 | 11 |
| E.S. | 6 | 10 | 17 | 26 |

Upon review of the above, one skilled in the art should appreciate that the above drilling fluids are suitable for use in the drilling of oil and gas wells.

### Example-3

The following experiment was carried out to indicate the shale inhibition of the fluids of this invention.

Each of the drilling fluids of Example 2 were separately mixed with 25.0 grams of shale drilling cutting. As a control, 25 grams of shale drilling cuttings were mixed with water. The mixtures were hot rolled at 150°F (65°C) for 16 hours. After hot rolling the shale cuttings were separated on 80 mesh screen. The shale cutting were washed with petroleum ether and dried in air 100°F (38°C). The weight of the shale drilling cuttings were measured after drying off the petroleum ether. The following recovery of the shale drilling cuttings was obtained after the above described hot rolling treatment.

| | Mud 4 | Mud 5 | Control |
|---|---|---|---|
| | PNB | BPNB | H₂O |
| Grams recovered | 24.93 | 25.1 | 0 |
| % recovery | 99.7% | 100.4 | 0 |

In the water control, all the shale drilling cuttings were dispersed without any recovery. In contrast, nearly total recovery was achieved with the glycol ether based drilling fluids of the present invention. One skilled in the art should appreciate from the above experiments indicate that the glycol fluids of this invention inhibit the hydration of shale and would understand that the drilling fluids should not have an adverse effect on shale formations encountered during the drilling of a subterranean well.

### Example-4

The following experiment was carried out to show the temperature effects on the solubility in sea water of the glycol ethers utilized in the formulations of the drilling fluids of the present invention.

Propylene glycol n-butyl ether (PNB), dipropylene glycol n-butyl ether (DPNB), tripropylene glycol n-butyl ether(TPNB) and polypropylene glycol n-butyl ether (PPNB) were all tested. Glycol ether and deionized water (DI) or sea water (SW) were mixed to give the % volume mixtures shown. The mixture was then cooled to -10°F (-23.3°C). Each sample was slowly allowed to warm to 80°F (27°C) and was visually observed. The temperature at which the mixtures became cloudy, i.e. the cloud point temperature of each sample was recorded. The cloud point temperature is the temperature at which the glycol ether begins to become insoluble in water. The following results were obtained:

| 5% Glycol ether | | | | |
|---|---|---|---|---|
| | PNB | DPNB | TPNB | PPNB |
| DI | | | | |
| °C(°F) | 11.6 (53) | 8.3 (47) | 5 (41) | 0 (<32) |
| SW | | | | |
| °C (°F) | 10 (50) | 6.1 (43) | 3.3 (38) | 0 (<32) |

| 10% Glycol ether | | | | |
|---|---|---|---|---|
| | PNB | DPNB | TPNB | PPNB |
| DI | | | | |
| °C(°F) | 0 (32) | 0 (<32) | 0 (<32) | 0 (<32) |
| SW | | | | |
| °C(°F) | 0 (<32) | 0 (<32) | 0 (<32) | 0 (<32) |

Upon review of the above data, one skilled in the art should realize that glycol ethers in the drilling fluids of the present invention will be miscible in cold sea water and yet will be two phases with water at temperatures and concentrations typical of drilling with invert emulsion muds.

### Example-5

The following experiment was carried out to show the solubility properties of the glycol ethers utilized in the formulations of the drilling fluids of the present invention as compared to those ether materials previously disclosed.

PPG-400 (a polypropylene glycol having an average molecular weight of 400 AMU); PPG-600 (a polypropylene glycol having an average molecular weight of 600 AMU); propylene glycol n-butyl ether (PNB), dipropylene glycol n-butyl ether (DPNB), tripropylene glycol n-butyl ether(TPNB) and polypropylene glycol n-butyl ether (PPNB) were all tested. The glycol ether was added to the test solvent to give a 20 % volume mixture. In the following table the test solvents were deionized water (DI); sea water (SW); C₁₆-C₁₈ iso-olefin hydrocarbon (IO); and LVT-200 mineral oil (MO). Solubility was determined at 20°C (68°F) with "yes" indicating complete miscibility and "no" less than 10% miscibility. The following results were obtained:

| Test solvent | glycol | | | | | |
|---|---|---|---|---|---|---|
| | PPG-400 | PPG-600 | PNB | DPNB | TPNB | PPNB |
| DI | Yes | Yes | No | No | No | No |
| SW | Yes | Yes | No | No | No | No |
| IO | No | No | Yes | Yes | Yes | Yes |
| MO | No | No | Yes | Yes | Yes | Yes |

Upon review of the above data, one skilled in the art should realize that drilling fluids in which the continuous phase are the glycol ethers of the present invention will be soluble in oils and other oleaginous fluids unlike those previously disclosed.

### Example-6

The following mud formulations were prepared to demonstrate the utility of glycol ethers of this invention to prepare invert emulsion drilling fluids in a de-ionized water (D.I. water), fresh water (tap water), sea water and 25% CaCl₂ brine.

| Formulation | Grams |
|---|---|
| TPNB | 177 |
| Lime | 4.0 |
| VG PLUS | 4.0 |
| NOVAMUL | 8.0 |
| VERSAWET | 2.0 |
| Sil Wet - 766 | 2.0 |
| Aqueous Phase | 84 (ml) |
| Barite | 224 |

The above formulations were mixed separately with deionized water (DI water), fresh water, sea water and 25% CaCl₂ brine used as aqueous phase. These formulations were heat aged at 150°F (65°C) for 16 hours. The following rheologies were measured at room temperature before (Initial) and after heat aging (HA). Conductivity for each sample was measured in microsiemens using a traceable conductivity meter from Fischer Scientific Co.

| | Mud-6 | | Mud-7 | | Mud-8 | | Mud-9 | |
|---|---|---|---|---|---|---|---|---|
| | D.I. Water | | Fresh Water | | Sea Water | | CaCl₂ | |
| | Initial | HA | Initial | HA | Initial | HA | Initial | HA |
| E.S. | 17 | 17 | 16 | 18 | 16 | 21 | 35 | 48 |
| Conductivity (µs/cm) | 6.8 | 5.2 | 7.9 | 6.9 | 8.1 | 5.6 | 2.9 | 2.2 |
| PV | 45 | 56 | 51 | 58 | 50 | 59 | 41 | 58 |
| YP | 9 | 8 | 8 | 9 | 9 | 6 | 38 | 35 |
| Gels | | | | | | | | |
| 10 sec | 6 | 7 | 7 | 7 | 7 | 5 | 15 | 16 |
| 10 min. | 8 | 9 | 9 | 10 | 9 | 7 | 20 | 17 |

In view of the above results, one of skill in the art should conclude that the stability of invert emulsions formed with the drilling fluids of this invention do not depend on the salinity of the aqueous phase and that the electrical conductivity of the mud is to some extent adjustable.

### Example-7

Portions of the mud formulations from Example 6 were mixed with 3% lubricant by volume of the drilling fluid and heat aged at 150°F (65°C) for 8 hours. Illustrative lubricants included: Silicone Fluid A-50 from Union Carbide; iso-propyl palmitate; isomerized olefin (I.O. C₁₆-C₁₈) available from Amoco Chemicals; and LVT-200 which is a mineral oil available from Conoco. The following rheological properties were measured at room temperature after heat aging.

| | Mud-6 | Mud-7 | Mud-8 | Mud-9 |
|---|---|---|---|---|
| Lubricant | Silicone Fluid A-50 | iso-propyl palmitate | I.O. C₁₆-C₁₈ | LVT-200 |
| E.S. | 22 | 16 | 20 | 35 |
| PV | 33 | 34 | 32 | 37 |
| YP Gels | 8 | 9 | 12 | 40 |
| 10 sec. | 4 | 3 | 5 | 18 |
| 10 min. | 5 | 5 | 5 | 23 |

The above results should indicate to one of skill in the art that the drilling fluids formulations of this invention are compatible with various oils and lubricants.

### Example 8

Portions of the mud formulations from Example 6, were mixed with 15 g of shale drilling cuttings. As controls, 15 grams of shale drilling cuttings were mixed with water and 70:30 polypropylene glycol - 400 (PPG)/water ratio fluid. The mixtures were hot rolled at 150°F (65°C) for 90 minutes. After hot rolling the shale cuttings were separated on 80 mesh screen then washed with petroleum ether and dried. The following recovery of the drilling cuttings was obtained.

| | Water | 70:30 PPG/H₂O | Mud-6 | Mud-7 | Mud-8 | Mud-9 |
|---|---|---|---|---|---|---|
| % Recovered | 0 | 0 | 100 | 100 | 100 | 100 |

Upon review, one of skill in the art should understand that in water and 70:30 polypropylene glycol/water samples, the shale dispersed. In contrast the shale was fully recovered from the fluids of the present invention. The above experiments show the shale inhibition of drilling fluids of present invention.

### Example 9

The following experiment was carried out to demonstrate the solubility of the glycol ethers of this invention in a hydrocarbon solvent. For this example the ISOPAR-M solvent is a mineral oil available from Exxon Chemicals. Representative glycol ethers of the present inventions were mixed in an equal volume ratio with ISOPAR-M at 20°C (68°F). The following was observed:

| | | | | |
|---|---|---|---|---|
| glycol ether | PNB | DPNB | TPNB | PPNB |
| solubility | yes | yes | yes | yes |

Upon review by one of skill in the art, the above results indicate that glycol ethers of this invention are miscible with ISOPAR-M at 20°C (68°F).

While the compositions and methods of this invention have been described in terms of preferred embodiments, it will be apparent to those of skill in the art that variations may be applied to the process described herein without departing from the concept, spirit and scope of the invention. All such similar substitutes and modifications apparent to those skilled in the art are deemed to be within the scope and concept of the invention as it is set out in the following claims.

## Claims

1. A drilling fluid comprising a continuous phase including at least glycol ether selected from propylene glycol n-butyl ether, dipropylene glycol n-butyl ether, tripropylene glycol n-butyl ether; tetrapropylene glycol n-butyl ether; pentapropylene glycol n-butyl ether, hexapropylene glycol n-butyl ether; heptapropylene glycol n-butyl ether and combinations thereof, and
an emulsifier
said glycol ether having a viscosity at 25°C of less than 10 centipoise and said glycol ether being miscible in fresh water or sea water at temperatures less than 20 °C.

2. The drilling fluid of claim 1 wherein the glycol ether comprises at least 5% by volume of the continuous phase.

3. The drilling fluid of claim 2 wherein the glycol ether comprises at least 50% by volume of the continuous phase.

4. The drilling fluid of claim 1 further comprising a lubricant.

5. The drilling fluid of claim 1 further comprising an oil.

6. The drilling fluid of claim 5 wherein at 20°C the continuous phase of said drilling fluid consists essentially of glycol ether and oil.

7. The drilling fluid of claim 5 wherein the oil is selected from the group consisting of mineral oil, vegetable oil, synthetic oil or mixtures thereof.

8. The drilling fluid of claim 7 wherein the synthetic oil is selected from the group consisting of ester, ether, dialkyl carbonate, acetal or synthetic hydrocarbon.

9. The drilling fluid of claim 6 wherein the oil is selected from the group consisting of mineral oil, vegetable oil, synthetic oil or mixtures thereof.

10. The drilling fluid of claim 9 wherein the synthetic oil is selected from the group consisting of ester, ether, dialkyl carbonate, acetal or synthetic hydrocarbon.

11. The drilling fluid of claim 1 wherein the glycol ether is polypropylene glycol n-butyl ether.

12. The drilling fluid of claim 1 wherein the glycol ether is selected from the group consisting of dipropylene glycol n-butyl ether, tripropylene glycol n-butyl ether, tetrapropylene glycol n-butyl ether, and mixture thereof.

13. An invert emulsion fluid having utility for drilling, completing, or working over subterranean wells, said fluid comprising:
an oleaginous fluid including a glycol ether, said glycol ether being at 20°C miscible with oil and less than 10% by volume of the glycol ether being miscible in fresh water or sea water at 20°C, and wherein said glycol ether is selected from propylene glycol n-butyl ether; dipropylene glycol n-butyl ether, tripropylene glycol n-butyl ether; tetrapropylene glycol n-butyl ether; pentapropylene-glycol n-butyl ether; hexapropylene glycol n-butyl ether; heptapropylene glycol n-butyl ether and combinations thereof,
a nonoleaginous fluid; and
an emulsifier, said emulsifier being functionally effective to stabilize the invert emulsion.

14. The invert emulsion fluid of claim 13 wherein said oleaginous fluid comprises greater than 30% by volume of said invert emulsion fluid.

15. The invert emulsion fluid of claim 13 wherein said preferentially-oil-soluble glycol ether is selected from dipropylene glycol n-butyl ether; tripropylene glycol n-butyl ether; tetrapropylene glycol n-butyl ether; and combinations thereof.

16. The invert emulsion fluid of claim 13 wherein said nonoleaginous fluid is selected from the group consisting of fresh water, sea water, a brine containing organic or inorganic dissolved salts, an aqueous liquid containing water-miscible organic compounds, and combinations thereof.

17. The invert emulsion of claim 13 further comprising a weighting agent or a bridging agent wherein the weighting or bridging agent is selected from the group consisting of calcium carbonate, dolomite, siderite, barite, celestite, iron oxides, manganese oxides, and halites.

18. The invert emulsion of claim 13 further comprising a corrosion inhibitor.

19. An invert emulsion fluid having utility for drilling completing, or working over subterranean wells, said fluid comprising:
a nonoleaginous fluid,
an oleaginous fluid, said oleaginous fluid comprising at least about 50% by volume of a glycol ether, said glycol ether being miscible in oil and such that less than 10% by volume of the glycol ether is miscible in fresh water or sea water at 20°C and wherein said glycol ether is selected from propylene glycol n-butyl ether; dipropylene glycol n-butyl ether; tripropylene glycol n-butyl ether; tetra propylene glycol n-butyl ether; pentapropylene glycol n-butyl ether; hexapropylene glycol n-butyl ether; heptapropylene glycol n-butyl ether and combinations thereof;
an emulsifying agent and
a weighting or bridging agent.

20. The invert emulsion fluid of claim 19 wherein said oleaginous liquid is selected from dipropylene glycol n-butyl ether; tripropylene glycol n-butyl ether; tetra propylene glycol n-butyl ether; and combinations thereof.

21. The invert emulsion fluid of claim 20 wherein said nonoleaginous liquid is an aqueous liquid selected from the group consisting of fresh water, sea water, a brine containing organic or inorganic dissolved salts, an aqueous liquid containing water-miscible organic compounds, and combinations thereof.

22. The invert emulsion of claim 21 further comprising a corrosion inhibitor.

23. The invert emulsion of claim 18 or 22 wherein said corrosion inhibitor is selected from phosphates, silicates, borates, zinc compounds, organic amines, benzoic acid, benzoic acid derivatives, phosphate esters, heterocyclic nitrogen compounds, heterocyclic sulfur compounds, organic acids, and combinations thereof.

## Patentansprüche

1. Ein Bohrfluid, das eine kontinuierliche Phase umfaßt, die wenigstens Glycolether, ausgewählt aus Propylenglycol-n-butylether; Dipropylenglycol-n-butylether; Tripropylenglycol-n-butylether; Tetrapropylenglycol-n-butylether; Pentapropylenglycol-n-butylether; Hexapropylenglycol-n-butylether; Heptapropylenglycol-n-butylether und Kombinationen daraus, und
einen Emulgator enthält,
wobei der Glycolether eine Viskosität bei 25°C von weniger als 10 Centipoise aufweist und der Glycolether mit frischem Wasser oder Seewasser bei Temperaturen kleiner als 20°C mischbar (miscible) ist.

2. Das Bohrfluid gemäß Anspruch 1, wobei der Glycolether wenigstens 5 Vol.-% der kontinuierlichen Phase umfaßt.

3. Das Bohrfluid gemäß Anspruch 2, wobei der Glycolether wenigstens 50 Vol.-% der kontinuierlichen Phase umfaßt.

4. Das Bohrfluid gemäß Anspruch 1, das weiterhin ein Befeuchtungsmittel umfaßt.

5. Das Bohrfluid gemäß Anspruch 1, das weiterhin ein Öl umfaßt.

6. Das Bohrfluid gemäß Anspruch 5, wobei die kontinuierliche Phase des Bohrfluids bei 20°C im wesentlichen aus Glycolether und Öl besteht.

7. Das Bohrfluid gemäß Anspruch 5, wobei das Öl ausgewählt ist aus der Gruppe bestehend aus Mineralöl, Gemüseöl, synthetischem Öl oder Mischungen daraus.

8. Das Bohrfluid gemäß Anspruch 7, wobei das synthetische Öl ausgewählt ist aus der Gruppe bestehend aus Ester, Ether, Dialkylcarbonat, Acetal oder synthetischem Kohlenwasserstoff.

9. Das Bohrfluid gemäß Anspruch 6, wobei das Ö1 ausgewählt ist aus der Gruppe bestehend aus Mineralöl, Gemüseöl, synthetischem Öl oder Mischungen daraus.

10. Das Bohrfluid gemäß Anspruch 9, wobei das synthetische Öl ausgewählt ist aus der Gruppe bestehend aus Ester, Ether, Dialkylcarbonat, Acetal oder synthetischem Kohlenwasserstoff.

11. Das Bohrfluid gemäß Anspruch 1, wobei der Glycolether Polypropylenglycol-n-butylether ist.

12. Das Bohrfluid gemäß Anspruch 1, wobei der Glycolether ausgewählt ist aus der Gruppe bestehend aus Dipropylenglycol-n-butylether, Tripropylenglycol-n-butylether, Tetrapropylenglycol-n-butylether und Mischungen daraus.

13. Ein Invertemulsionsfluid, das eine Anwendbarkeit beim Bohren, Fertigstellen oder Überarbeiten von subterranen Schächten besitzt, wobei das Fluid umfaßt:
ein fettiges Fluid, das einen Glycolether enthält, wobei der Glycolether bei 20°C mit Öl mischbar ist und weniger als 10 Vol.-% des Glycolethers in Frischwasser oder Seewasser bei 20°C mischbar ist und wobei der Glycolether ausgewählt ist aus Propylenglycol-n-butylether; Dipropylenglycol-n-butylether; Tripropylenglycol-n-butylether; Tetrapropylenglycol-n-butylether; Pentapropylenglycol-n-butylether; Hexapropylenglycol-n-butylether; Heptapropylenglycol-n-butylether und Kombinationen daraus,
ein nichtfettiges Fluid; und
einen Emulgator, wobei der Emulgator funktional effektiv ist, um die Invertemulsion zu stabilisieren.

14. Das Invertemulsionsfluid gemäß Anspruch 13, wobei das fettige Fluid mehr als 30 Vol.-% des Invertemulsionsfluids umfaßt.

15. Das Invertemulsionsfluid gemäß Anspruch 13, wobei der vorzugsweise öllösliche Glycolether ausgewählt ist aus Dipropylenglycol-n-butylether; Tripropylenglycol-n-butylether; Tetrapropylenglycol-n-butylether und Kombinationen daraus.

16. Das Invertemulsionsfluid gemäß Anspruch 13, wobei das nichtfettige Fluid ausgewählt ist aus der Gruppe bestehend aus frischem Wasser, Seewasser, einer Lauge, die organische oder anorganische gelöste Salze enthält, einer wäßrigen Flüssigkeit, die wassermischbare organische Verbindungen enthält, und Kombinationen daraus.

17. Die Invertemulsion gemäß Anspruch 13, die weiterhin ein Wichtungsmittel oder ein Verbrückungsmittel umfaßt, wobei das Wichtungs-oder Verbrückungsmittel ausgewählt ist aus der Gruppe bestehend aus Calciumcarbonat, Dolomit, Siderit, Barit, Celestit, Eisenoxiden, Manganoxiden und Haliten.

18. Die Invertemulsion gemäß Anspruch 13, die weiterhin einen Korrosionsinhibitor umfaßt.

19. Ein Invertemulsionsfluid mit einer Anwendbarkeit beim Bohren, Fertigstellen oder Überarbeiten von subterranen Schächten, wobei das Fluid umfaßt:
ein nichtfettiges Fluid,
ein fettiges Fluid, wobei das fettige Fluid wenigstens etwa 50 Vol.-% eines Glycolethers umfaßt, wobei der Glycolether mischbar mit Öl ist und so ist, daß weniger als 10 Vol.-% des Glycolethers in frischem Wasser oder Seewasser bei 20°C mischbar sind und wobei der Glycolether ausgewählt ist aus Propylenglycol-n-butylether; Dipropylenglycol-n-butylether; Tripropylenglycol-n-butylether; Tetrapropylenglycol-n-butylether;
Pentapropylenglycol-n-butylether; Hexapropylenglycol-n-butylether; Heptapropylenglycol-n-butylether und Kombinationen daraus;
einen Emulgator und
ein Wichtungs- oder Verbrückungsmittel.

20. Das Invertemulsionsfluid gemäß Anspruch 19, wobei die fettige Flüssigkeit ausgewählt ist aus Dipropylenglycol-n-butylether; Tripropylenglycol-n-butylether; Tetrapropylenglycol-n-butylether und Kombinationen daraus.

21. Das Invertemulsionsfluid gemäß Anspruch 20, wobei die nichtfettige Flüssigkeit eine wäßrige Flüssigkeit ist, ausgewählt aus der Gruppe bestehend aus frischem Wasser, Seewasser, einer Lauge, die organische oder anorganische gelöste Salze enthält, einer wäßrigen Flüssigkeit, die wassermischbare organische Verbindungen enthält, und Kombinationen daraus.

22. Die Invertemulsion gemäß Anspruch 21, die weiterhin einen Korrosionsinhibitor umfaßt.

23. Die Invertemulsion gemäß Anspruch 18 oder 22, wobei der Korrosionsinhibitor ausgewählt ist aus Phosphaten, Silicaten, Boraten, Zinkverbindungen, organischen Aminen, Benzoesäure, Benzoesäurederivaten, Phosphatestern, heterocyclischen Stickstoffverbindungen, heterocyclischen Schwefelverbindungen, organischen Säuren und Kombinationen daraus.

## Revendications

1. Un fluide de forage comprenant une phase continue contenant au moins un éther de glycol sélectionné entre l'éther n-butylique du propylène glycol, l'éther n-butylique du dipropylène glycol, l'éther n-butylique du tripropylène glycol, l'éther n-butylique du tétrapropylène glycol, l'éther n-butylique du pentapropylène glycol, l'éther n-butylique de l'hexapropylène glycol, l'éther n-butylique de l'heptapropylène glycol et leurs combinaisons, et
un émulsifiant
ledit éther de glycol ayant une viscosité à 25°C inférieure à 10 centipoises et ledit éther de glycol étant miscible avec l'eau douce ou l'eau de mer à des températures inférieures à 20°C.

2. Le fluide de forage de la revendication 1, dans lequel l'éther de glycol représente au moins 5% en volume de la phase continue.

3. Le fluide de forage de la revendication 2, dans lequel l'éther de glycol représente au moins 50% en volume de la phase continue.

4. Le fluide de forage de la revendication 1, contenant au surplus un lubrifiant.

5. Le fluide de forage de la revendication 1, comprenant au surplus une huile.

6. Le fluide de forage de la revendication 5, dans lequel, à 20°C, la phase continue dudit fluide de forage consiste essentiellement en éther de glycol et en huile.

7. Le fluide de forage de la revendication 5, dans lequel l'huile est sélectionnée dans le groupe constitué par les huiles minérales, les huiles végétales, les huiles synthétiques ou leurs mélanges.

8. Le fluide de forage de la revendication 7, dans lequel l'huile synthétique est choisie dans le groupe constitué par les esters, les éthers, les dialkyl-carbonates, les acétals et les hydrocarbures synthétiques.

9. Le fluide de forage de la revendication 6, dans lequel l'huile est choisie dans le groupe constitué par les huiles minérales, les huiles végétales, les huiles synthétiques et leurs mélanges.

10. Le fluide de forage de la revendication 9, dans lequel l'huile synthétique est choisie dans le groupe constitué par les esters, les éthers, les dialkyl-carbonates, les acétals et les hydrocarbures synthétiques.

11. Le fluide de forage de la revendication 1, dans lequel l'éther de glycol est l'éther n-butylique du polypropylène glycol.

12. Le fluide de forage de la revendication 1, dans lequel l'éther de glycol est choisi dans le groupe constitué par l'éther n-butylique du dipropylène glycol, l'éther n-butylique du tripropylène glycol, l'éther n-butylique du tétrapropylène glycol et leurs mélanges.

13. Un fluide sous forme d'émulsion inverse utilisable pour le forage, l'achèvement ou la fermeture de puits souterrains, ledit fluide comprenant :
un fluide oléagineux contenant un éther de glycol, ledit éther de glycol étant, à 20°C, miscible avec l'huile et moins de 10% en volume de l'éther de glycol étant miscible avec l'eau douce ou l'eau de mer à 20°C, et dans lequel ledit éther de glycol est sélectionné entre l'éther n-butylique du propylène glycol, l'éther n-butylique du dipropylène glycol, l'éther n-butylique du tripropylène glycol, l'éther n-butylique du tétrapropylène glycol, l'éther n-butylique du pentapropylène glycol, l'éther n-butylique de l'hexapropylène glycol, l'éther n-butylique de l'heptapropylène glycol et leurs combinaisons,
un fluide non oléagineux ; et
un émulsifiant, ledit émulsifiant ayant pour fonction de stabiliser l'émulsion inverse.

14. L'émulsion inverse selon la revendication 13, dans laquelle ledit fluide oléagineux représente plus de 30% en volume de ladite émulsion inverse.

15. L'émulsion inverse selon la revendication 13, dans laquelle ledit éther de glycol soluble préférentiellement dans l'huile est choisi entre l'éther n-butylique du dipropylène glycol, l'éther n-butylique du tripropylène glycol, l'éther n-butylique du tétrapropylène glycol et leurs combinaisons.

16. L'émulsion inverse de la revendication 13, dans laquelle ledit fluide non oléagineux est choisi dans le groupe constitué par l'eau douce, l'eau de mer, une saumure contenant un ou plusieurs sels organiques ou non organiques dissous, un liquide aqueux contenant des composés organiques miscibles à l'eau et leurs combinaisons.

17. L'émulsion inverse de la revendication 13, contenant au surplus un agent de densification ou un agent de pontage, dans laquelle l'agent de densification ou l'agent de pontage est choisi dans le groupe constitué par le carbonate de calcium, la dolomite, la sidérite, la baryte, la célestine, les oxydes de fer, les oxydes de manganèse et les halites.

18. L'émulsion inverse de la revendication 13, contenant au surplus un inhibiteur de corrosion.

19. Une émulsion inverse utilisable pour le forage, l'achèvement ou la fermeture de puits souterrains, ledit fluide comprenant :
un fluide non oléagineux,
un fluide oléagineux, ledit fluide oléagineux représentant au moins environ 50% en volume d'un éther de glycol, ledit éther de glycol étant miscible dans l'huile et tel que moins de 10% en volume de l'éther de glycol soit miscible dans l'eau douce ou l'eau de mer à 20°C et dans lequel ledit éther de glycol est sélectionné entre l'éther n-butylique du propylène glycol, l'éther n-butylique du dipropylène glycol, l'éther n-butylique du tripropylène glycol, l'éther n-butylique du tétrapropylène glycol, l'éther n-butylique du pentapropylène glycol, l'éther n-butylique de l'hexapropylène glycol, l'éther n-butylique de l'heptapropylène glycol et leurs combinaisons,
un agent émulsifiant, et
un agent densifiant ou de pontage.

20. L'émulsion inverse de la revendication 19, dans laquelle ledit liquide oléagineux est choisi entre l'éther n-butylique du dipropylène glycol, l'éther n-butylique du tripropyiène glycol, l'éther n-butylique du tétrapropylène glycol et leurs combinaisons.

21. L'émulsion inverse de la revendication 20, dans laquelle ledit fluide non oléagineux est un liquide aqueux choisi dans le groupe constitué par l'eau douce, l'eau de mer, une saumure contenant des sels organiques ou non organiques dissous, un liquide aqueux contenant des composés organiques miscibles à l'eau et leurs combinaisons.

22. L'émulsion inverse de la revendication 21, contenant au surplus un inhibiteur de corrosion.

23. L'émulsion inverse des revendications 18 ou 22, dans laquelle ledit inhibiteur de corrosion est choisi entre les phosphates, les silicates, les borates, les composés de zinc, les amines organiques, l'acide benzoïque, les dérivés d'acide benzoïque, les esters phosphatés, les composés hétérocycliques comportant des atomes d'azote ou de soufre, les sels organiques et leurs combinaisons.
